# EUROPEAN PATENT SPECIFICATION

(11) **EP 3 339 952 B1**
(45) Date of publication and mention of the grant of the patent: **11.03.2020**
(21) Application number: 16897681.9
(22) Date of filing: 01.08.2016
(51) Int. Cl.: G03B 17/56, F16M 13/04, F16M 11/12, F16M 11/32, F16M 13/00, H04M 1/02, F21L 4/02

(54) **HANDHELD CLOUD PLATFORM AND BATTERY COVER TIGHTENING MECHANISM THEREOF**
TRAGBARE CLOUD-PLATTFORM UND MECHANISMUS ZUR BATTERIEDECKELBEFESTIGUNG DAFÜR
PLATE-FORME PORTATIVE EN NUAGE ET MÉCANISME ASSOCIÉ DE SERRAGE DE COUVERCLE DE BATTERIE

(30) Priority: 08.04.2016 CN 201620293369 U
(43) Date of publication of application: 27.06.2018
(73) Proprietor: Autel Robotics Co., Ltd., Shenzhen, Guangdong 518055 (CN)
(72) Inventor: LIANG, Zhiying, Shenzhen Guangdong 518055 (CN)
(74) Representative: Gulde & Partner
(86) International application number: PCT/CN2016/092766
(87) International publication number: WO 2017/173748

(56) References cited:
- WO-A1-2009/157936
- WO-A1-2015/027331
- CN-A- 104 373 903
- CN-A- 105 140 435
- CN-A- 105 372 910
- CN-U- 204 929 513
- CN-U- 205 048 121
- JP-A- 2004 077 752
- JP-A- 2006 081 282
- JP-A- 2008 176 172
- KR-A- 20080 110 415

## Description

### BACKGROUND

### Technical Field

The present application relates to the technical field of handheld gimbals, and in particular, to a handheld gimbal and a battery cover tightening mechanism thereof.

### Related Art

A gimbal during video collection is an apparatus that controls angle adjustment of a camera, that is, an apparatus that supports the camera in rotating towards directions to perform position adjustment.

A battery cover of an existing handheld gimbal has a rotary tightening mechanism. When an expansion device is mounted, the battery cover may be over-tightened and loosened or removed, causing unnecessary trouble.

Conventional housing for holding a power source for light device is disclosed in WO2009/157936 A1.

### SUMMARY

The present application provides a handheld gimbal and a battery cover tightening mechanism thereof, to prevent a battery cover from being excessively tightened when an expansion device is mounted on a handheld gimbal apparatus, so that the battery cover is not over-tightened and loosened or removed, to achieve a controllable force and implement easy assembly and disassembly. The technical solutions are as follows:
A battery cover tightening mechanism is provided, including:
a battery cover; and
a cover plate rotatably connected to the battery cover and forming a cavity.

The cover plate is provided with a boss, the boss is correspondingly mounted into the cavity and a resistance member is sleeved on the boss, an end of the resistance member being fixed to the battery cover and the other end of the resistance member being fixed to the cover plate.

The resistance member includes: a resistant spring, an upper resistance wheel and a lower resistance wheel connected to the upper resistance wheel, wherein an end of the resistant spring is fixed to the battery cover and the other end of the resistant spring is fixed to the upper resistance wheel; and the lower resistance wheel is fixed to the cover plate.

Further, wherein the battery cover is provided with a first groove, and the cover plate is provided with a second groove, and wherein an end of the resistant spring is fixed in the first groove and a protruding portion is disposed on the lower resistance wheel, the protruding portion being fixed in the second groove on the cover plate.

Further, a side of the upper resistance wheel is provided with a third groove and an end of the resistant spring away from the first groove is inserted into the third groove.

Further, the upper resistance wheel is provided with a first gear and the lower resistance wheel is provided with a second gear engaging with and connected to the first gear.

Further, a lug is provided on the periphery of the upper resistance wheel and a limiting slot matching the lug is provided on an inner wall of the battery cover.

Further, when the cover plate is rotated to cause a propulsive force borne by the resistant spring to be less than or equal to an elastic force of the resistant spring, the cover plate drives the battery cover to rotate; and when the cover plate causes a propulsive force borne by the resistant spring to be larger than an elastic force of the resistant spring, tooth skipping occurs between the upper resistance wheel and the lower resistance wheel, causing the cover plate not to drive the battery cover to rotate.

Further, a gimbal cavity connecting slot is provided on the top of the battery cover and a sealing ring is sleeved over the connecting slot; and the battery cover further comprises a battery cover latch and a stepped hole is provided inside the center of the battery cover, wherein the battery cover latch abuts against a hole of the stepped hole, the boss is correspondingly positioned in another hole of the stepped hole and the battery cover latch and the boss are screwed together.

The present application further provides a handheld gimbal, including the battery cover tightening mechanism according to any of the foregoing descriptions.

Further, an expansion interface is provided on the bottom of the cover plate.

The present application has the following beneficial effects: The handheld gimbal and the battery cover tightening mechanism thereof include the resistance member. When the cover plate is rotated, the battery cover is driven to rotate. When the rotation force is less than the resistance of the resistance member, the battery cover is directly driven to rotate. When the rotation force is larger than the resistance of the resistance member, tooth skipping occurs between the upper resistance wheel and the lower resistance wheel, causing the cover plate not to drive the battery cover to rotate and the resistance member acts to prevent a locking phenomenon that is caused by an excessive tightening force, which makes it difficult to open the battery cover.

### BRIEF DESCRIPTION OF THE DRAWINGS

FIG. 1 is a schematic structural diagram of a handheld gimbal according to an embodiment of the present application;
FIG. 2 is a schematic structural diagram of a handheld gimbal integrated with a support thereof according to an embodiment of the present application;
FIG. 3 is a partially enlarged view of Z in FIG. 2;
FIG. 4 is an exploded view of FIG. 3;
FIG. 5a is a schematic structural diagram 1 of a battery cover tightening mechanism according to an embodiment of the present application;
FIG. 5b is a schematic structural diagram 2 of a battery cover tightening mechanism according to an embodiment of the present application;
FIG. 5c is a schematic structural diagram 3 of a battery cover tightening mechanism according to an embodiment of the present application;
FIG. 6 is a cutaway drawing of a battery cover tightening mechanism according to an embodiment of the present application;
FIG. 7 is an exploded view 1 of a battery cover tightening mechanism according to an embodiment of the present application; and
FIG. 8 is an exploded view 2 of a battery cover tightening mechanism according to an embodiment of the present application.

### Reference numerals:

1: Handheld gimbal support; 2: Battery cover tightening mechanism; 3: Handheld gimbal; 22: Cover plate; 221: Boss; 222: Second groove; 223: Expansion interface; 23: Lower resistance wheel; 231: Protruding portion; 232: Second gear; 24: Upper resistance wheel; 241: Third groove; 242: Lug; 243: First gear; 25: Resistant spring; 26: Battery cover; 261: Gimbal cavity connecting slot; 262: First groove; 263: Limiting slot; 264: Stepped hole; 27: Sealing ring; 28: Battery cover latch; 29: Screw

### DETAILED DESCRIPTION

To make the objectives, technical solutions and advantages of the present application clearer and more comprehensible, the following further describes the present application in detail with reference to the accompanying drawings and embodiments. It should be understood that the specific embodiments described herein are merely intended to explain the present application, but are not intended to limit the present application.

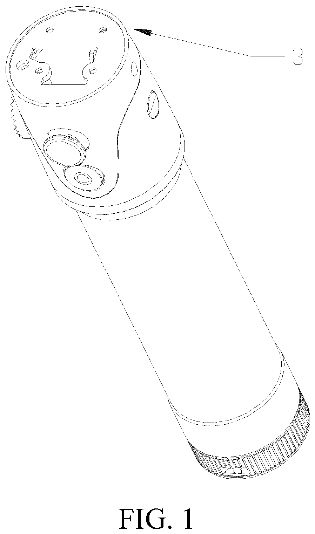

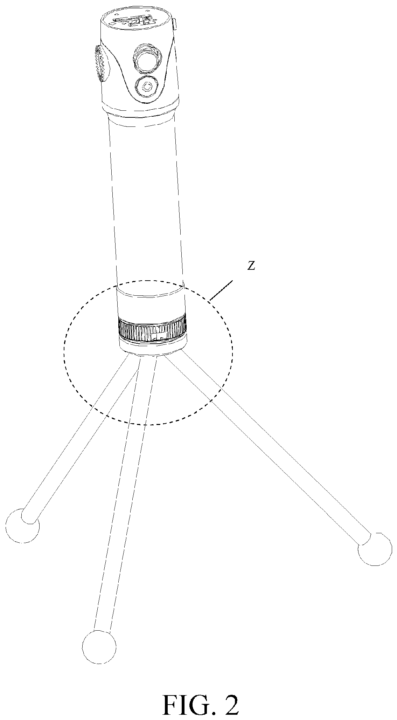

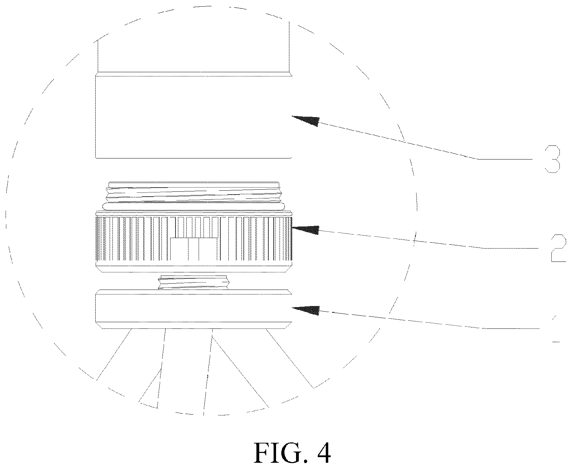

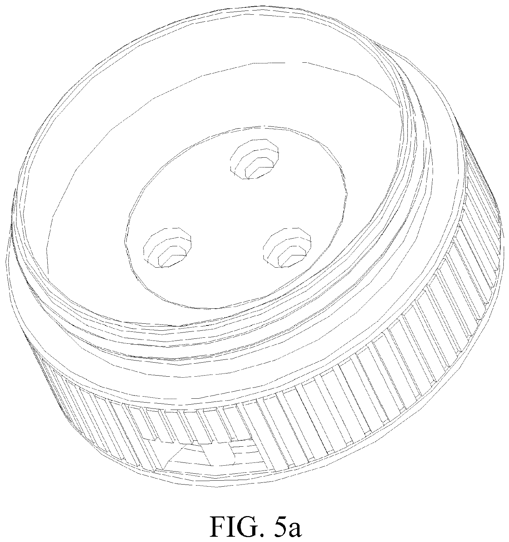

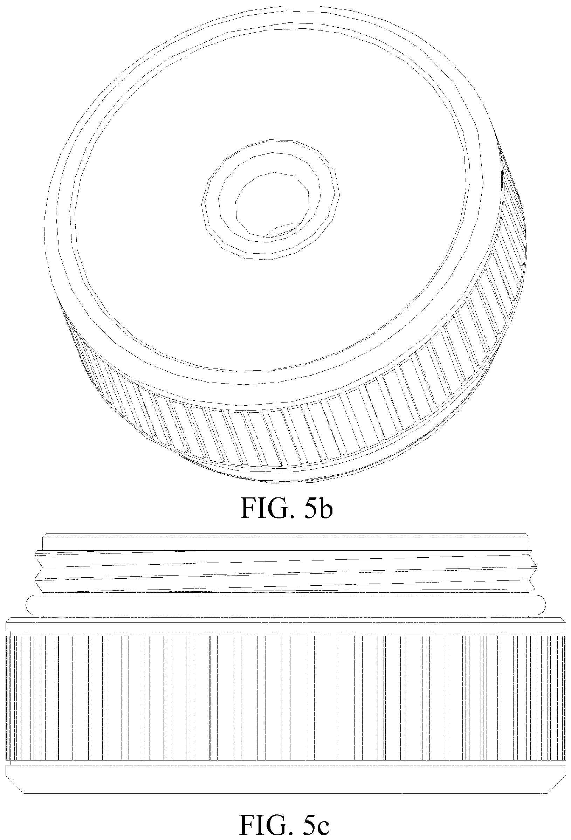

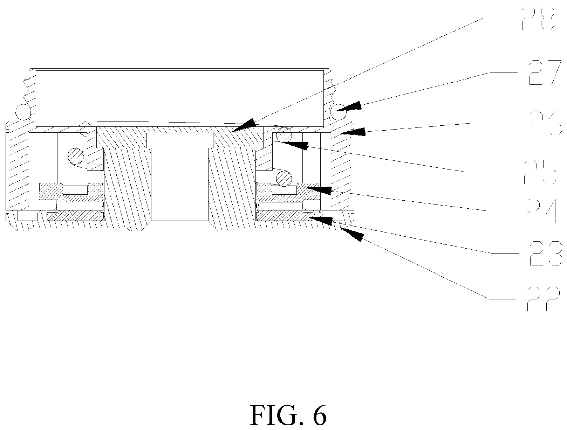

An embodiment of the present application provides a battery cover tightening mechanism 2. As shown in FIG. 1 to FIG. 8, the battery cover tightening mechanism 2 includes: a battery cover 26 and a cover plate 22 rotatably connected to the battery cover 26 and forming a cavity. The cover plate 22 is provided with a boss 221. The boss 221 is correspondingly mounted into the cavity and a resistance member is sleeved on the boss 221, an end of the resistance member being positioned and connected to the battery cover 26 and the other end of the resistance member being fixed to the cover plate 22. The foregoing positioning connection is a fixed connection. When the cover plate 22 is rotated, the battery cover 26 is driven to rotate. When the cover plate 22 is rotated to cause the rotation force to be less than or equal to the resistance of the resistance member, the battery cover 26 is directly driven to rotate. When the rotation force is larger than the resistance of the resistance member, the resistance member acts to cause the cover plate 22 not to drive the battery cover 26 to rotate, so as to prevent a locking phenomenon that is caused by an excessive tightening force.

In this embodiment, the resistance member includes: a resistant spring 25, an upper resistance wheel 24 and a lower resistance wheel 23 connected to the upper resistance wheel 24. An end of the resistant spring 25 is fixed to the battery cover 26 and the other end is fixed to the upper resistance wheel 24. The lower resistance wheel 23 is fixed to the cover plate 22. When the cover plate 22 is rotated, the battery cover 26 is driven to rotate. When the cover plate 22 is rotated to cause a propulsive force (that is, the rotation force, the same hereinafter) borne by the resistant spring 25 to be less than or equal to the resistance of the resistance member, the battery cover 26 is directly driven to rotate. When the rotation force is larger than the resistance of the resistance member, the resistance member acts to cause the cover plate 22 not to drive the battery cover 26 to rotate, so as to prevent a locking phenomenon that is caused by an excessive tightening force and that makes the battery cover 26 of a handheld gimbal 3 difficult to open.

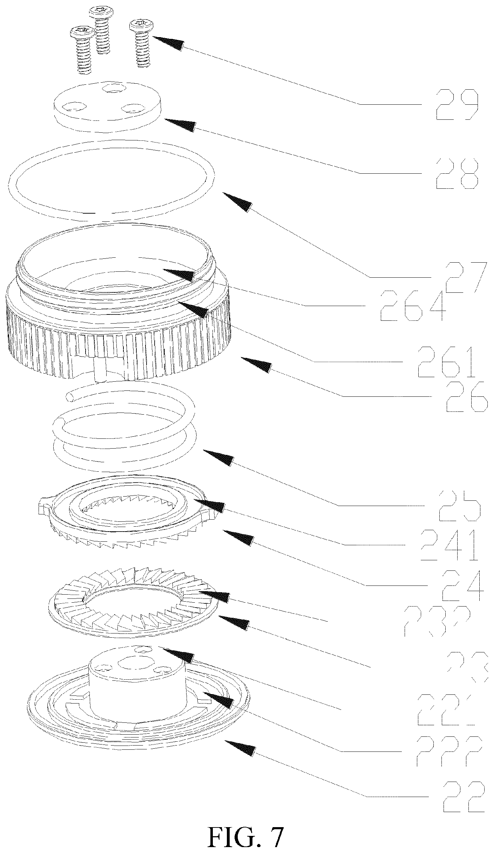

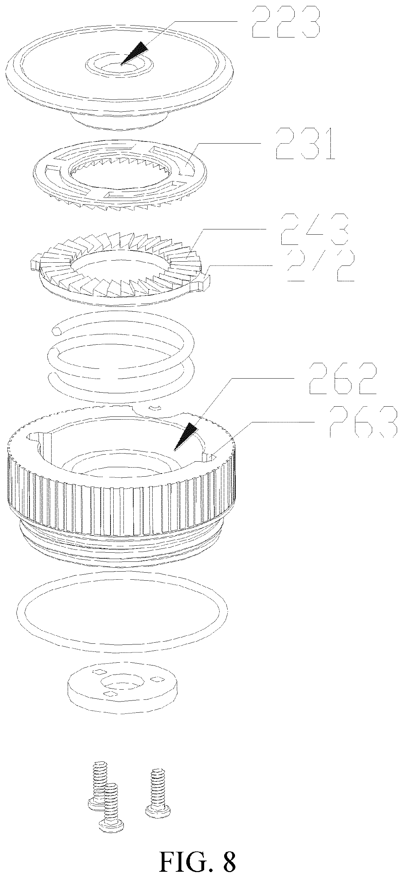

In this embodiment, as shown in FIG. 7 and 8, the battery cover 26 is provided with a first groove 262 and the cover plate 22 is provided with a second groove 222 surrounding the boss 221. The resistance member includes: the resistant spring 25, the upper resistance wheel 24 and the lower resistance wheel 23 connected to the upper resistance wheel 24. An end of the resistant spring 25 is inserted into the first groove 262 and the other end is positioned on a side of the upper resistance wheel 24. A protruding portion 231 matching the second groove 222 through positioning is disposed on a side of the lower resistance wheel 23 away from the upper resistance wheel 24. The protruding portion 231 of the lower resistance wheel 23 is inserted into the second groove 222. Disposed in such a manner, the protruding portion 231 of the lower resistance wheel 23 is stably inserted into the second groove 222 and remains stationary. This forms a fixed connection, so that the lower resistance wheel 23 and the cover plate 22 are fixed more securely. Disposed in the foregoing manner, the resistant spring 25, the upper resistance wheel 24 and the battery cover 26 remain stationary relative to each other in a horizontal direction. The lower resistance wheel 23 is inserted into the second groove 222 of the cover plate 22 and the lower resistance wheel 23 and the cover plate 22 also remain stationary relative to each other in the horizontal direction, to ensure that when the battery cover tightening mechanism 2 is rotated, only the resistant spring 25 is retractable in a vertical direction and the upper resistance wheel 24 and the lower resistance wheel 23 can rotate relative to each other. There is a specific inclination angle between the upper resistance wheel 24 and the lower resistance wheel 23. The present application is not limited thereto.

In this embodiment, a side of the upper resistance wheel 24 is provided with a third groove 241 and an end of the resistant spring 25 away from the first groove 262 is inserted into the third groove 241. By using the foregoing structure, the upper resistance wheel 24 and the resistant spring 25 are fixedly connected. The resistant spring 25 is a rotary spring (a twist spring).

In this embodiment, the upper resistance wheel 24 is provided with a first gear 243 and the lower resistance wheel 23 is provided with a second gear 232 engaging with and connected to the first gear 243. The upper resistance wheel 24 and the lower resistance wheel 23 form a gear engagement structure.

In this embodiment, a lug 242 is provided on the periphery of the upper resistance wheel 24 and a limiting slot 263 matching the lug 242 is provided on an inner wall of the battery cover 26. The lug 242 of the upper resistance wheel 24 is stably inserted into the first groove 262 and remains stationary. This forms a fixed connection, so that the upper resistance wheel 24 and the battery cover 26 are fixed more securely relative to each other.

In this embodiment, when the cover plate 22 is rotated, the battery cover 26 is driven to rotate. When the cover plate 22 is rotated to cause the propulsive force (that is, the rotation force, the same hereinafter) borne by the resistant spring 25 to be less than or equal to the resistance of the resistant spring 25, the cover plate 22 directly drives the battery cover 26 to rotate, by using the lower resistance wheel 23 fixedly connected to the cover plate 22, and the upper resistance wheel 24 engaging with and connected to the lower resistance wheel 23 and the battery cover 26 fixedly connected to the upper resistance wheel 24. When the rotation force is larger than the resistance of the resistant spring 25, tooth skipping occurs between the upper resistance wheel and the lower resistance wheel and slip occurs, causing the cover plate 22 not to drive the battery cover 26 to rotate, so as to achieve a proper tightening force and prevent a locking phenomenon that is caused by an excessive tightening force and that makes the battery cover difficult to open. The strength of the resistance of the resistance member is determined by the resistant spring 25. The rotation of the cover plate 22 causes the lower resistance wheel 23 to push the upper resistance wheel 24 to rotate and the upper resistance wheel 24 subjected to the rotation force generates an upward force component to press the spring.

In this embodiment, a gimbal cavity connecting slot 261 is provided on the top of the battery cover 26 and a seal ring 27 is sleeved over the gimbal cavity connecting slot 261. The sealing ring 27 makes the handheld gimbal 3 have better sealing property.

In this embodiment, the battery cover 26 further includes a battery cover latch 28 and a stepped hole 264 is provided inside the center of the battery cover 26. The battery cover latch 28 abuts against a hole of the stepped hole 264, the boss 221 is correspondingly positioned in another hole of the stepped hole 264 and the battery cover latch 28 and the boss 221 are screwed together by using a screw 29. Certainly, the battery cover latch 28, the battery cover 26 and the cover plate 22 may alternatively be fixed in another manner such as welding or clamping. This is not limited herein.

An embodiment of the present application further provides a handheld gimbal 3, including the battery cover tightening mechanism 2 according to any of the foregoing embodiments. When the cover plate 22 is rotated, the battery cover 26 is driven to rotate. When the rotation force is less than or equal to the resistance of the resistance member, the battery cover 26 is directly driven to rotate. When the rotation force is larger than the resistance of the resistance member, the resistance member acts to cause the cover plate 22 not to drive the battery cover 26 to rotate, so as to prevent a locking phenomenon that is caused by an excessive tightening force and that makes the battery cover 26 of the handheld gimbal 3 difficult to open.

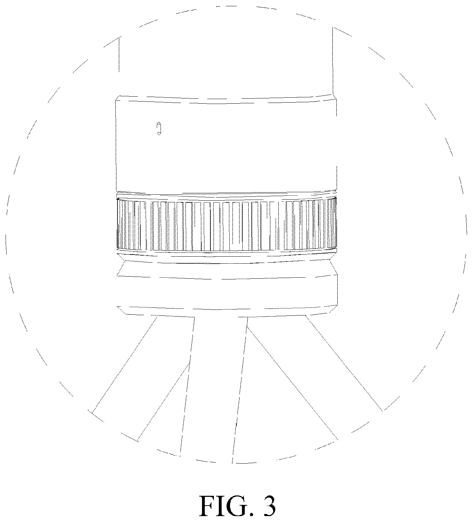

In this embodiment, as shown in FIG. 3, FIG. 4, FIG. 7 and FIG. 8, an expansion interface 223 is provided on the bottom of the cover plate 22 and a handheld gimbal support 1 can be mounted. When the handheld gimbal support 1 is rotated, the battery cover tightening mechanism 2 is driven to rotate and the handheld gimbal 3 is tightened and assembled. A gimbal cavity is sleeved over the gimbal cavity connecting slot 261 and is fixed by using a thread or in another member. The stiffness/softness of the sealing ring 27 matches the gimbal cavity connecting slot 261 to achieve a sealing function in assembly. The handheld gimbal 3 is capable of supplying power to an expansion device. The gimbal cavity is fastened to the battery cover by using the gimbal cavity connecting slot 261.

The handheld gimbal 3 and the battery cover tightening mechanism 2 thereof include: a resistant spring 25, an upper resistance wheel 24 and a lower resistance wheel 23. When the handheld gimbal support 1 is rotated to drive the cover plate 22 to rotate, the cover plate 22 drives the battery cover 26 to rotate. When the rotation force is less than or equal to the resistance of the resistant spring 25, the handheld gimbal support 1 directly drives the battery cover 26 to rotate. When the rotation force is larger than the resistance of the resistant spring 25, tooth skipping occurs between the upper resistance wheel and the lower resistance wheel and slip occurs, to prevent a locking phenomenon that is caused by an excessive tightening force and that makes the battery cover 26 of a handheld gimbal 3 difficult to open when needed.

The foregoing descriptions are merely preferred embodiments of the present application, but are not intended to limit the present application. Any modification, equivalent replacement, or improvement made should fall within the scope of the present application.

## Claims

1. A battery cover tightening mechanism (2), comprising:
a battery cover (26) and a cover plate (22), the cover plate rotatably connected to the battery cover and forming a cavity;
wherein the cover plate is provided with a boss (221), and the boss is correspondingly mounted into the cavity;
wherein a resistance member is sleeved on the boss, an end of the resistance member being fixed to the battery cover and the other end of the resistance member being fixed to the cover plate;
**characterized in that**
the resistance member comprises a resistant spring, (25) an upper resistance wheel (24) and a lower resistance wheel (23) connected to the upper resistance wheel;
wherein an end of the resistant spring is fixed to the battery cover and the other end of the resistant spring is fixed to the upper resistance wheel, wherein the lower resistance wheel is fixed to the cover plate.

2. The battery cover tightening mechanism according to claim 1, wherein the battery cover is provided with a first groove, and the cover plate is provided with a second groove, and wherein an end of the resistant spring is fixed in the first groove and a protruding portion is disposed on the lower resistance wheel, the protruding portion being fixed in the second groove on the cover plate.

3. The battery cover tightening mechanism according to claim 2, wherein a side of the upper resistance wheel is provided with a third groove and an end of the resistant spring away from the first groove is inserted into the third groove.

4. The battery cover tightening mechanism according to claim 1 or 2, wherein the upper resistance wheel is provided with a first gear and the lower resistance wheel is provided with a second gear engaging with and connected to the first gear.

5. The battery cover tightening mechanism according to claim 1 or 2, wherein
a lug is provided on the periphery of the upper resistance wheel and a limiting slot matching the lug is provided on an inner wall of the battery cover.

6. The battery cover tightening mechanism according to claim 4, wherein when the cover plate is rotated to cause a propulsive force borne by the resistant spring to be less than or equal to an elastic force of the resistant spring, the cover plate drives the battery cover to rotate; and when the cover plate causes a propulsive force borne by the resistant spring to be larger than an elastic force of the resistant spring, tooth skipping occurs between the upper resistance wheel and the lower resistance wheel, causing the cover plate not to drive the battery cover to rotate.

7. The battery cover tightening mechanism according to claim 1, wherein a gimbal cavity connecting slot is provided on the top of the battery cover and a sealing ring is sleeved over the connecting slot; and the battery cover further comprises a battery cover latch and a stepped hole is provided inside the center of the battery cover, wherein the battery cover latch abuts against a hole of the stepped hole, the boss is correspondingly positioned in another hole of the stepped hole and the battery cover latch and the boss are screwed together.

8. A handheld gimbal, comprising the battery cover tightening mechanism according to any of claims 1 to 7.

9. The handheld gimbal according to claim 8, wherein an expansion interface is provided on a bottom of the cover plate.

## Patentansprüche

1. Batteriedeckelbefestigungsmechanismus (2), umfassend:
einen Batteriedeckel (26) und
eine Deckelplatte (22),
wobei die Deckelplatte drehbar mit dem Batteriedeckel verbunden ist und einen Hohlraum bildet;
wobei die Deckelplatte mit einem Aufsatz (221) versehen ist, und der Aufsatz entsprechend in dem Hohlraum angebracht ist;
wobei ein Widerstandselement auf den Aufsatz aufgeschoben ist, ein Ende des Widerstandselements an dem Batteriedeckel fixiert ist und das andere Ende des Widerstandselements an der Deckelplatte fixiert ist;
**dadurch gekennzeichnet, dass**
das Widerstandselement eine Widerstandsfeder (25),
ein oberes Widerstandsrad (24)
und ein unteres Widerstandsrad (23), das mit dem oberen Widerstandsrad verbunden ist, umfasst;
wobei ein Ende der Widerstandsfeder an dem Batteriedeckel fixiert ist und das andere Ende der Widerstandsfeder an das obere Widerstandsrad fixiert ist, wobei das untere Widerstandsrad an die Deckelplatte fixiert ist.

2. Batteriedeckelbefestigungsmechanismus nach Anspruch 1, wobei der Batteriedeckel mit einer ersten Nut versehen ist und die Deckelplatte mit einer zweiten Nut versehen ist, und wobei ein Ende der Widerstandsfeder in der ersten Nut fixiert ist und ein hervorstehender Abschnitt auf dem unteren Widerstandsrad angeordnet ist, wobei der hervorstehende Abschnitt in der zweiten Nut auf der Deckelplatte fixiert ist.

3. Batteriedeckelbefestigungsmechanismus nach Anspruch 2, wobei eine Seite des oberen Widerstandsrads mit einer dritten Nut versehen ist und ein Ende der Widerstandfeder von der ersten Nut weg in die dritte Nut eingesetzt ist.

4. Batteriedeckelbefestigungsmechanismus nach Anspruch 1 oder 2, wobei das obere Widerstandsrad mit einem ersten Zahnrad versehen ist und das untere Widerstandsrad mit einem zweiten Zahnrad versehen ist, das in das erste Zahnrad eingreift und damit verbunden ist.

5. Batteriedeckelbefestigungsmechanismus nach Anspruch 1 oder 2, wobei
eine Nase am Umfang des oberen Widerstandsrads bereitgestellt ist und ein der Nase angepasster Begrenzungsschlitz auf einer inneren Wand des Batteriedeckels bereitgestellt ist.

6. Batteriedeckelbefestigungsmechanismus nach Anspruch 4, wobei, wenn die Deckelplatte gedreht wird, um eine von der Widerstandsfeder getragene Antriebskraft zu bewirken, die geringer oder gleich einer elastischen Kraft der Widerstandsfeder ist, die Deckelplatte den Batteriedeckel zum Drehen antreibt; und wenn die Deckelplatte eine von der Widerstandsfeder getragene Antriebskraft erzeugt, die geringer oder gleich einer elastischen Kraft der Widerstandsfeder ist, Zahnsprünge zwischen dem oberen Widerstandsrad und dem unteren Widerstandsrad auftreten, die bewirken, dass die Deckelplatte den Batteriedeckel nicht zum Drehen antreibt.

7. Batteriedeckelbefestigungsmechanismus nach Anspruch 1, wobei ein kardanisch aufgehängter Hohlraum-Verbindungsschlitz auf dem Batteriedeckel bereitgestellt ist und ein Dichtungsring auf den Verbindungsschlitz aufgeschoben ist; und der Batteriedeckel ferner eine Batteriedeckelverriegelung umfasst und eine Stufenbohrung in der Mitte des Batteriedeckels bereitgestellt ist, wobei die Batteriedeckelverriegelung an ein Loch der Stufenbohrung anliegt, der Aufsatz entsprechend in einem weiteren Loch der Stufenbohrung positioniert ist und die Batteriedeckelverriegelung und der Aufsatz zusammengeschraubt sind.

8. Handgehaltene kardanische Aufhängung, umfassend den Batteriedeckelbefestigungsmechanismus nach einem der Ansprüche 1 bis 7.

9. Handgehaltene kardanische Aufhängung nach Anspruch 8, wobei eine Erweiterungsschnittstelle auf einem Boden der Deckelplatte bereitgestellt ist.

## Revendications

1. Mécanisme de serrage de couvercle de batterie (2), comprenant :
un couvercle de batterie (26) et
une plaque de recouvrement (22),
la plaque de recouvrement étant reliée de manière rotative au couvercle de batterie et formant une cavité ;
la plaque de recouvrement étant pourvue d'un bossage (221), et le bossage étant monté de manière correspondante dans la cavité ;
un élément de résistance étant emmanché sur le bossage, une extrémité de l'élément de résistance étant fixée au couvercle de batterie et l'autre extrémité de l'élément de résistance étant fixée à la plaque de recouvrement ;
**caractérisé en ce que**
l'élément de résistance comprend un ressort résistant (25),
une roue supérieure de résistance (24)
et une roue inférieure de résistance (23) reliée à la roue supérieure de résistance ;
une extrémité du ressort résistant étant fixée au couvercle de batterie et l'autre extrémité du ressort résistant étant fixée à la roue supérieure de résistance, la roue inférieure de résistance étant fixée à la plaque de recouvrement.

2. Mécanisme de serrage de couvercle de batterie selon la revendication 1, dans lequel le couvercle de batterie est pourvu d'une première rainure, et la plaque de recouvrement est pourvue d'une deuxième rainure, et dans lequel une extrémité du ressort résistant est fixée dans la première rainure et une partie faisant saillie est disposée sur la roue inférieure de résistance, la partie faisant saillie étant fixée dans la deuxième rainure sur la plaque de recouvrement.

3. Mécanisme de serrage de couvercle de batterie selon la revendication 2, dans lequel un côté de la roue supérieure de résistance est pourvu d'une troisième rainure et une extrémité du ressort résistant éloignée de la première rainure et insérée dans la troisième rainure.

4. Mécanisme de serrage de couvercle de batterie selon la revendication 1 ou 2, dans lequel la roue supérieure de résistance est pourvue d'un premier élément denté et la roue inférieure de résistance est pourvue d'un second élément denté qui vient en prise avec le premier élément denté et est relié à celui-ci.

5. Mécanisme de serrage de couvercle de batterie selon la revendication 1 ou 2, dans lequel
une patte est prévue sur la périphérie de la roue supérieure de résistance et une encoche de limitation correspondant à la patte est prévue sur une paroi intérieure du couvercle de batterie.

6. Mécanisme de serrage de couvercle de batterie selon la revendication 4, dans lequel, quand la plaque de recouvrement est tournée de façon qu'une force propulsive supportée par le ressort résistant soit inférieure ou égale à une force élastique du ressort résistant, la plaque de recouvrement entraîne le couvercle de batterie en rotation ; et quand la plaque de recouvrement amène une force propulsive supportée par le ressort résistant à être supérieure à une force élastique du ressort résistant, un glissement de dent se produit entre la roue supérieure de résistance et la roue inférieure de résistance, de façon que la plaque de recouvrement n'entraîne pas le couvercle de batterie en rotation.

7. Mécanisme de serrage de couvercle de batterie selon la revendication 1, dans lequel une rainure de connexion de cavité de cardan est prévue sur le dessus du couvercle de batterie et une bague d'étanchéité est emmanchée sur la rainure de connexion ; et le couvercle de batterie comprend en outre un verrou de couvercle de batterie et un trou étagé est prévu au centre du couvercle de batterie, le verrou de couvercle de batterie venant en butée contre un trou du trou étagé, le bossage étant positionné de manière correspondante dans un autre trou du trou étagé et le verrou de couvercle de batterie et le bossage étant vissés l'un à l'autre.

8. Cardan portatif, comprenant le mécanisme de serrage de batterie selon une des revendications 1 à 7.

9. Cardan portatif selon la revendication 8, dans lequel une interface d'extension est prévue sur un fond de la plaque de recouvrement.
